# DEMANDE DE BREVET EUROPEEN

(11) **EP 2 546 100 A1**
(43) Date de publication de la demande: **16.01.2013**
(21) Numéro de dépôt: 12174721.6
(22) Date de dépôt: 03.07.2012
(51) Int. Cl.: B60P 1/02, B60P 1/48

(54) **Véhicule à caisson suspendu, et application**

(30) Priorité: 11.07.2011 FR 1156279
(71) Demandeur: VEOLIA PROPRETE, 92000 Nanterre (FR)
(72) Inventeur: Farcot, Benoît-Joseph, 92100 Boulogne Billancourt (FR); Champeil, Jean-Marc, 94120 Fontenay Sous Bois (FR); Coutelle, Loïc, 59118 Wambrechies (FR)
(74) Mandataire: Novagraaf Technologies

(57) **Abrégé**

La présente invention concerne un véhicule de collecte de déchets comportant un caisson (3) suspendu à un portique mobile par le biais d'un système de tringlerie, le caisson et le système de tringlerie évoluant entre une position basse et une position haute, la position haute correspondant à une position de chargement du caisson et la position basse à une position de déchargement du caisson,
le véhicule comportant en outre :
- des mécanismes de verrouillage en position haute du système de tringlerie pendant le chargement du caisson,
- des moyens d'aide au levage du caisson, permettant une levée du caisson sans énergie externe.

## Description

L'invention concerne, de façon générale, les techniques de transport terrestre de matières.

Plus précisément, l'invention concerne, selon un premier aspect, un véhicule de collecte de déchets comportant un caisson amovible.

On connaît, dans le domaine du transport terrestre de matière, des camions-bennes classiques, qui consistent en un camion de type porteur sur lequel une benne, généralement basculante, est accrochée. Toutefois, ces véhicules motorisés présentent un large encombrement, et ne sont donc pas adaptés à la collecte de proximité.

On connaît également des véhicules s'appuyant sur un principe de chargement-déchargement d'un caisson roulant sur un plan incliné se manoeuvrant à partir d'un vérin. Le caisson est, par exemple, installé sur un châssis de faible dimension, de manière à pouvoir être tracté par des animaux ou des véhicules non motorisés. Toutefois, de tels véhicules nécessitent un temps de mise en oeuvre important, puisque le déchargement du caisson impliquait l'utilisation d'un certain nombre d'éléments de levage tels que des treuils ou des poulies. En outre, le roulement du caisson sur le plan incliné occasionne un risque d'usure importante du caisson.

L'objectif de la présente invention est de fournir un véhicule de collecte de déchets permettant de remédier aux inconvénients précités.

Ainsi, l'invention concerne de manière générale un véhicule de collecte de déchets comportant un caisson suspendu à un portique mobile par le biais d'un système de tringlerie, le caisson et le système de tringlerie évoluant entre une position basse et une position haute, la position haute correspondant à une position de chargement du caisson et la position basse à une position de déchargement du caisson,

le véhicule comportant en outre :
- des mécanismes de verrouillage en position haute du système de tringlerie pendant le chargement du caisson,
- des moyens d'aide au levage du caisson, permettant une levée du caisson sans énergie externe.

Dans un premier mode de réalisation, les moyens d'aide au levage comprennent des éléments mécaniques du système de tringlerie. Ces éléments mécaniques comprennent, notamment des biellettes formant des bras démultiplicateurs, des éléments formant des bras de levier, ou encore des contrepoids.

Dans un second mode de réalisation, les moyens d'aide au levage comprennent des mécanismes d'accumulation d'énergie lors du passage du système de tringlerie de la position haute à la position basse, l'énergie correspondant au travail du poids du caisson et de son chargement entre les deux positions.

Dans un exemple particulier de ce second mode de réalisation, le véhicule comprend en outre des mécanismes de verrouillage en position basse du système de tringlerie pendant le déchargement du caisson, le déverrouillage des mécanismes de verrouillage en position basse entraînant une restitution de l'énergie accumulée, de manière à permettre le passage de la tringlerie de la position basse à la position haute.

Les mécanismes de verrouillage en position basse sont, par exemple, compris dans le groupe comprenant : des crochets, des goupilles déverrouillés manuellement, et des électroaimants déverrouillés par l'intermédiaire d'une télécommande.

Dans un exemple particulier de ce second mode de réalisation, le véhicule comprend en outre un système de fourniture d'énergie aux mécanismes d'accumulation d'énergie. Ce système est destiné à fournir de l'énergie pour la première levée d'un caisson, c'est-à-dire avant qu'il n'y ait eu une phase d'accumulation d'énergie dans les moyens d'accumulation, due à une descente du caisson et de son contenu.

Le système de fourniture d'énergie comprend, par exemple, un système à vis sans fin apte à coopérer avec une visseuse, par exemple une visseuse portative à batterie.

Dans une réalisation particulière de l'invention, les mécanismes d'accumulation d'énergie comportent des ressorts de compression.

Dans une autre réalisation particulière de l'invention, les mécanismes d'accumulation d'énergie comportent des vérins.

Dans une autre réalisation particulière, les mécanismes de verrouillage en position haute sont compris dans le groupe comprenant : des crochets, des goupilles déverrouillés manuellement, et des électroaimants déverrouillés par l'intermédiaire d'une télécommande.

D'autres avantages et particularités de la présente invention résulteront de la description qui va suivre, donnée à titre d'exemple non limitatif et faite en référence aux figures annexées :
- les figures 1 et 2 montrent un véhicule selon un premier mode de réalisation de l'invention, en deux positions haute et basse, et en particulier le détail du système de tringlerie.
- les figures 3 et 4 montrent un véhicule selon un second mode de réalisation de l'invention, en deux positions haute et basse.

Comme annoncé précédemment, l'invention concerne un véhicule hippomobile comprenant un châssis 1, un ensemble de roues 21 et 22, et un caisson mobile 3.

Le châssis 1 présente, de face (vue non représentée), une forme géométrique en U inversé.

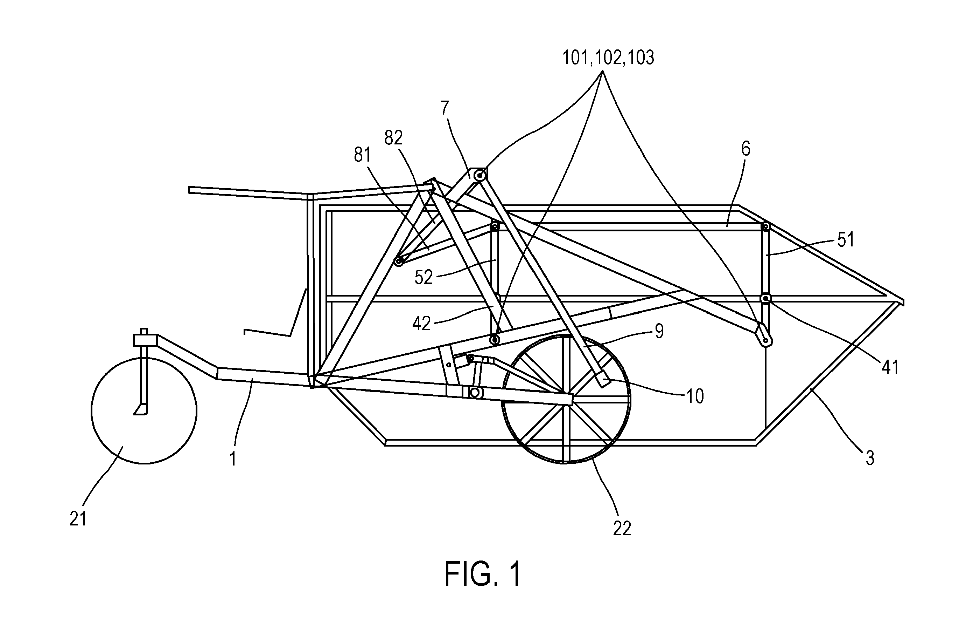

L'ensemble de tringlerie, appelé tringlerie dans la suite de la description, va maintenant être détaillé au regard de la figure 1, dans le cadre du premier mode de réalisation.

Cette figure représentant une vue latérale d'un véhicule selon l'invention, seule la moitié des éléments de la tringlerie sont représentés.

La tringlerie comporte quatre points de liaison destinés à recevoir quatre points d'attache situés sur le caisson 3. Les points d'attache du caisson correspondent, par exemple, à des tenons, et dans ce cas les points de liaison situés sur la tringlerie correspondent à des mortaises.

La tringlerie comporte quatre biellettes, 51 et 52, articulées sur le châssis en rotation autour d'axes perpendiculaires au plan de figure et passant par les points de liaison 41 et 42 de manière à former des bras de leviers démultiplicateurs. Les deux biellettes situées sur un même côté de la tringlerie sont reliées entre elles par l'intermédiaire d'un bras 6. Les deux ensembles de biellettes situés de part et d'autre du châssis sont ensuite reliés entre eux par l'intermédiaire d'une barre de torsion 7 positionnée transversalement au-dessus de l'ensemble du châssis. La liaison entre les biellettes et cette barre de torsion est effectuée via un ensemble d'articulation comportant deux bras 81 et 82.

En outre, le châssis comprend, uniquement sur un côté, un bras démultiplicateur 9 à l'extrémité duquel se trouve un contrepoids 10, assurant une manipulation aisée du caisson par un homme, sans énergie additionnelle.

Ainsi la présente invention permet, grâce à cet assemblage de bras démultiplicateurs et de contrepoids, à une personne seule de mettre en mouvement le caisson pour passer d'une position basse, de déchargement, à une position haute, de chargement.

Une fois le caisson en position haute, il est verrouillé à l'aide de mécanismes de verrouillage, qui seront décrits ultérieurement.

Lorsque le caisson est en position haute, le bas du caisson est situé à une certaine distance du sol, ce qui permet au véhicule de se déplacer sans risque d'usure du bas de caisson.

Le mouvement des différents éléments de la tringlerie lors du passage d'une position à une autre est montré, pour le premier mode de réalisation de l'invention, sur les trois figures 1, 2 et 3. Lorsqu'un utilisateur souhaite positionner le caisson en position de déchargement, il déverrouille les mécanismes de verrouillage situés au niveau des points de liaison 41 et 42.

Ces mécanismes de verrouillage sont, par exemple,
- de simples crochets ou goupilles déverrouillés manuellement,
- des électroaimants déverrouillés par l'intermédiaire d'une télécommande.

Dans un mode de réalisation particulier, le véhicule comporte une batterie électrique positionnée sur le châssis, et permettant de fournir l'énergie nécessaire au déverrouillage des moyens de verrouillage.

En effet, lorsque le caisson est chargé de matériaux à transporter, le poids exercé sur les points de liaison 41, 42 est tel qu'il peut être nécessaire de fournir une énergie supplémentaire à l'énergie humaine.

Cette batterie est, par exemple, de petite dimension, de manière à ne pas augmenter le poids de l'ensemble de manière trop importante.

Lorsque le déverrouillage est effectué, sous l'action du poids du caisson et de son contenu, le caisson est mis en mouvement autour de trois axes de rotation fixes 101, 102 et 103.

Les biellettes 51 et 52 tournent respectivement autour de deux axes 41 et 42. Le bras 6 réalisant la liaison entre ces biellettes reste en position horizontal pendant tout le mouvement.

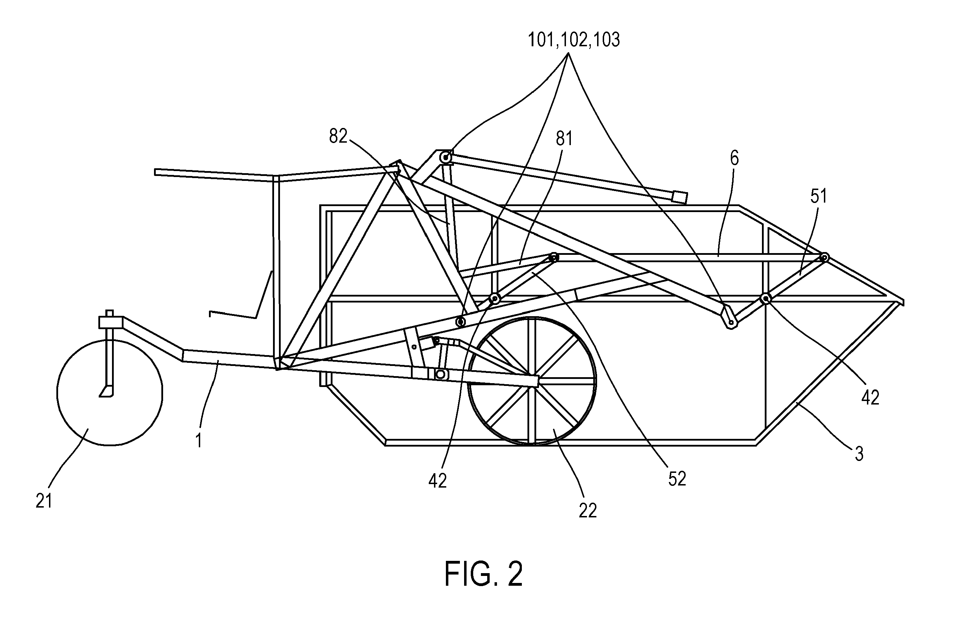

Dans la position basse, montrée sur la figure 2, le bas du caisson repose sur le sol, ce qui permet alors de désolidariser le caisson du châssis, afin d'envisager le chargement d'un nouveau caisson vide.

Afin de ralentir le mouvement lors de la descente, un frein de descente est organisé sur la barre de torsion 7, notamment afin d'éviter d'endommager le caisson sur le sol lors de l'arrivée en position basse. La remontée en position haute d'un nouveau caisson s'effectue ensuite aisément via l'ensemble de tringlerie précédemment décrit.

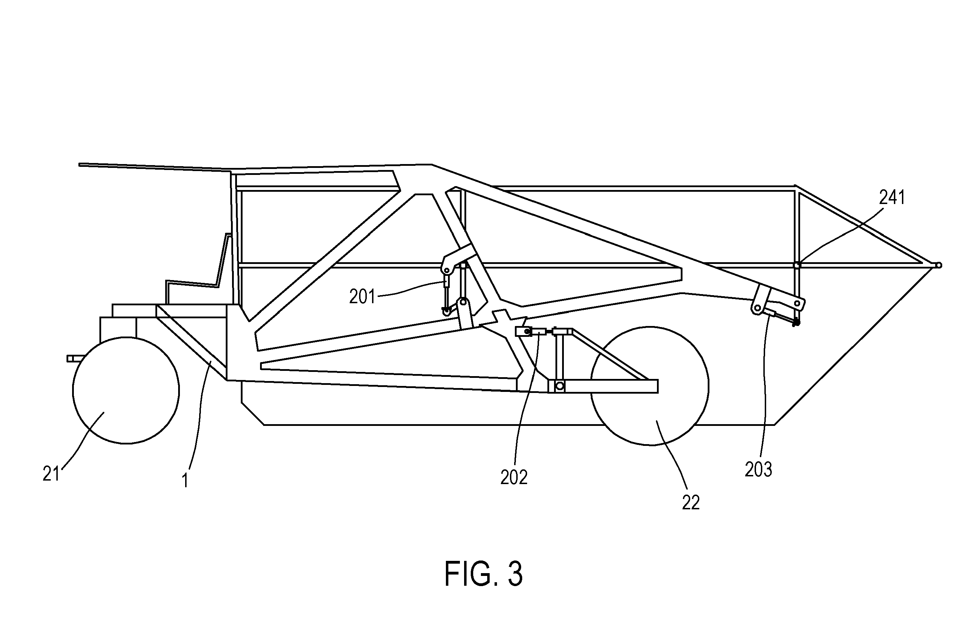

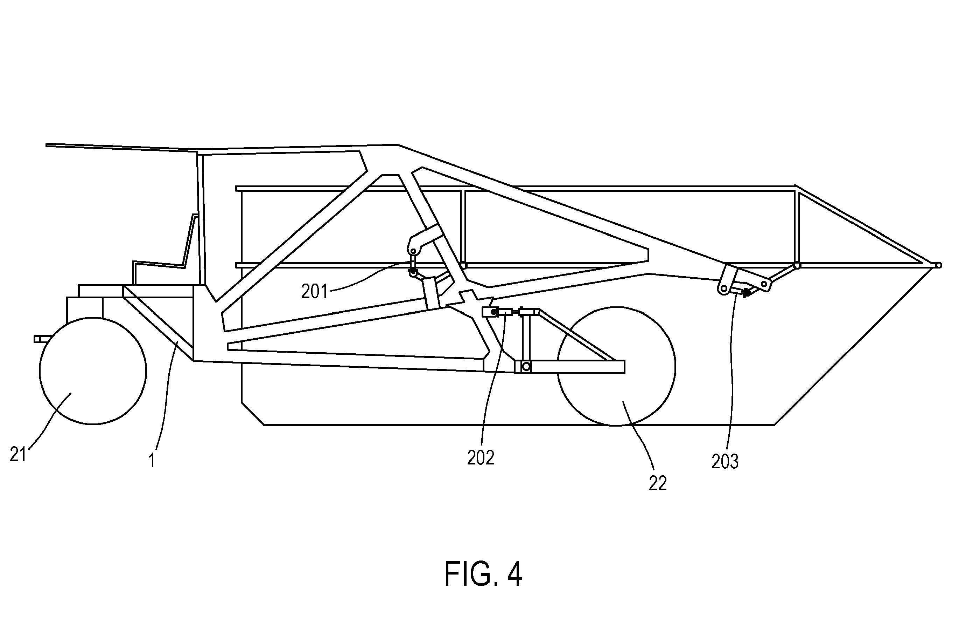

Un second mode de réalisation de la présente invention est montré en figures 3 et 4.

Dans cette réalisation, les moyens de levage consistent en des mécanismes d'accumulation d'énergie permettant, lors de la restitution de l'énergie, le passage de la tringlerie d'une position basse à une position haute sans apport d'énergie extérieure.

Le véhicule montré sur les figures 4 à 6 comporte, comme dans l'exemple précédent, un châssis sur lequel sont montés un caisson 3, et un ensemble de roues 21-22.

Ainsi que constaté sur ces figures, l'ensemble de tringlerie mis en oeuvre dans ce second mode de réalisation est simplifié par rapport au premier mode, puisque la tringlerie n'est plus utilisée comme moyen de levage, mais uniquement comme cadre permettant la mise en mouvement.

En outre, un véhicule selon le second mode de réalisation est **caractérisé en ce qu'**il comporte des mécanismes 201, 202 et 203 d'accumulation - restitution d'énergie, utilisée pour fournir l'énergie nécessaire au levage d'un caisson.

Le fonctionnement du chargement et déchargement d'un véhicule selon ce mode de réalisation est le suivant :
- lorsque le caisson est en position haute, montré sur la figure 3, des mécanismes de verrouillage, similaires à ceux mise en oeuvre dans le premier mode de réalisation, permettent le maintien en position du caisson et le chargement de celui-ci avec les matériaux à transporter,
- lorsqu'un utilisateur souhaite décharger le caisson, il déverrouille les moyens de verrouillage et, sous l'action du poids du caisson et de son contenu, le caisson est mis en mouvement vers la position basse montrée en figure 4,
- lors de ce mouvement, l'énergie créée est accumulée dans les moyens d'accumulation d'énergie 201 et 203,
- le caisson est ensuite verrouillé en position basse, ce qui permet à l'énergie accumulée d'être conservée dans les moyens d'accumulation d'énergie,
- après déchargement et/ou changement du caisson, lorsque l'utilisateur souhaite procéder à la remontée de la benne, il déverrouille les moyens de verrouillage en position basse, ce qui entraîne une restitution de l'énergie accumulée dans les moyens d'accumulation d'énergie.

Les moyens d'accumulation d'énergie sont, par exemple :
- des vérins hydrauliques,
- des ressorts de compression, ou
- tout autre moyen d'accumulation d'énergie mécanique.

Dans ce second mode de réalisation, il n'est pas nécessaire d'utiliser de système de freinage pour amortir la descente, puisque les moyens d'accumulation d'énergie effectuent eux-mêmes l'amortissement nécessaire à une descente sécurisée.

Les moyens de verrouillage en position basse sont, par exemple :
- de simples crochets ou goupilles déverrouillés manuellement,
- des électroaimants déverrouillés par l'intermédiaire d'une télécommande.

Dans une réalisation particulière de ce second mode, le véhicule comprend, en outre, un système permettant de fournir l'énergie nécessaire à la première levée d'un caisson. En effet, dans ce second mode de réalisation, les moyens de levage comprennent des moyens d'accumulation d'énergie dans lesquels l'énergie est accumulée lors de la première descente, sous le poids du caisson et de son contenu.

Or, la position de chargement d'un tel véhicule est la position haute, ce qui signifie qu'il est nécessaire de lever un premier caisson avant que de l'énergie n'ait été accumulée dans les moyens d'accumulation. Par conséquent, il est nécessaire de prévoir des moyens de fourniture d'énergie externe.

Dans un exemple, ces moyens consistent en un ensemble à vis sans fin, non représenté sur les figures. Cet ensemble est destiné à coopérer avec une visseuse électrique de manière à ce qu'une rotation de la visseuse électrique entraîne une accumulation d'énergie dans un ou plusieurs des moyens d'accumulation.

En outre, ce système de fourniture d'énergie pourra être utilisé pour compenser des pertes d'énergie au cours de levées ou descentes ultérieures.

## Revendications

1. Véhicule de collecte de déchets comportant un caisson (3) suspendu à un portique mobile par le biais d'un système de tringlerie, le caisson et le système de tringlerie évoluant entre une position basse et une position haute, la position haute correspondant à une position de chargement du caisson et la position basse à une position de déchargement du caisson,
le véhicule comportant en outre :
- des mécanismes de verrouillage en position haute du système de tringlerie pendant le chargement du caisson,
- des moyens d'aide au levage du caisson, permettant une levée du caisson sans énergie externe.

2. Véhicule de collecte selon la revendication 1, dans lequel les moyens d'aide au levage comprennent des éléments mécaniques du système de tringlerie.

3. Véhicule de collecte selon la revendication 1, dans lequel les moyens d'aide au levage comprennent des mécanismes d'accumulation d'énergie lors du passage du système de tringlerie de la position haute à la position basse, l'énergie correspondant au travail du poids du caisson et de son chargement entre les deux positions.

4. Véhicule de collecte selon la revendication 2, comprenant en outre des mécanismes de verrouillage en position basse du système de tringlerie pendant le déchargement du caisson, le déverrouillage des mécanismes de verrouillage en position basse entraînant une restitution de l'énergie accumulée, de manière à permettre le passage de la tringlerie de la position basse à la position haute.

5. Véhicule selon la revendication 4, dans lequel les mécanismes de verrouillage en position basse sont compris dans le groupe comprenant: des crochets, des goupilles déverrouillés manuellement, et des électroaimants déverrouillés par l'intermédiaire d'une télécommande.

6. Véhicule selon l'une des revendications 3 à 5, comprenant un système de fourniture d'énergie aux mécanismes d'accumulation d'énergie.

7. Véhicule selon la revendication 6, dans lequel le système de fourniture d'énergie comprend un système à vis sans fin apte à coopérer avec une visseuse.

8. Véhicule selon l'une des revendications précédentes, dans lequel les mécanismes d'accumulation d'énergie comportent des ressorts de compression.

9. Véhicule selon l'une des revendications 1 à 8, dans lequel les mécanismes d'accumulation d'énergie comportent des vérins.

10. Véhicule selon l'une des revendications précédentes, dans lequel les mécanismes de verrouillage en position haute sont compris dans le groupe comprenant : des crochets, des goupilles déverrouillés manuellement, et des électroaimants déverrouillés par l'intermédiaire d'une télécommande.
